# EUROPEAN PATENT APPLICATION

(11) **EP 3 321 726 A1**
(43) Date of publication of application: **16.05.2018**
(21) Application number: 17201844.2
(22) Date of filing: 15.11.2017
(51) Int. Cl.: G02B 27/01, G06F 3/01

(54) **METHOD OF PROVIDING CONTENT AND WEARABLE ELECTRONIC DEVICE FOR SAME**

(30) Priority: 15.11.2016 KR 20160151899
(71) Applicant: Samsung Electronics Co., Ltd., Gyeonggi-do 16677 (KR)
(72) Inventor: KIM, Jungsoo, Gyeonggi-do, (KR); KIM, Jongyoon, Seoul, (KR); SON, Dong-Il, Gyeonggi-do, (KR); YUN, Yong Sang, Gyeonggi-do, (KR); CHOI, Jong-Chul, Gyeonggi-do, (KR)
(74) Representative: HGF Limited

(57) **Abstract**

An electronic device is provided. The electronic device includes a fixed frame configured to be worn on a head of a user, a variable frame configured to rotate with respect to a rotation axis arranged in at least a part of the fixed frame, and a processor configured to output first content at least based on a first location of the variable frame with respect to the fixed frame, the first location corresponding to a first range, and output second content corresponding to the first content at least based on a second location of the variable frame with respect to the fixed frame, the second location corresponding to a second range.

## Description

### TECHNICAL FIELD

The present disclosure relates to a method and an apparatus for providing content in an electronic device.

### BACKGROUND

Recently, various devices in a form that can be directly wearable on a body have been developed. For example, electronic devices have been developed in a form that can be attached to or detached from a user's body, such as a head-mounted-display (HMD), smart glasses, a smart watch, a smart wristband, and a contact lens type device, or in a form that can be attached to or detached from clothes, such as a ring type device, a shoe type device, a clothing type device, and a glove type device. As the electronic devices are directly worn on the body, portability and user accessibility have improved.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a head mounted display (HMD) that may be worn on a user's head to provide content to the user. For example, the HMD may provide the user with virtual reality or augmented reality.

However, since the HMD provides only a particular type of content (for example, video content) among various types of content (for example, video content, audio content, and multimedia content), it is difficult to highly satisfy the user. Recently, in order to solve the problem, an HMD equipped with a speaker that supports both an image output mode and a sound output mode is being developed. However, the HMD has a problem in that the user has difficulty in being immersed in content as content output in a switched mode is not linked with content output in a previous mode.

Various embodiments of the present disclosure may provide a method and an apparatus for switching an operation mode of the electronic device based on a location of a variable frame that rotates with respect to a rotation axis arranged in at least a part of a fixed frame in the electronic device.

Various embodiments of the present disclosure may provide a method and an apparatus for, when an operation mode of the electronic device is changed according to a change in a location of a variable frame in the electronic device, providing content related to content that has been reproduced before the location of the variable frame is changed.

In accordance with an aspect of the present disclosure, an electronic device is provided. The electronic device includes a fixed frame configured to be worn on a head of a user, a variable frame configured to rotate with respect to a rotation axis arranged in at least a part of the fixed frame, and a processor configured to output first content at least based on a first location of the variable frame with respect to the fixed frame, the first location corresponding to a first range, and output second content corresponding to the first content at least based on a second location of the variable frame with respect to the fixed frame, the second location corresponding to a second range.

In accordance with another aspect of the present disclosure, a method of operating an electronic device that comprises a fixed frame configured to be worn on a head of a user and a variable frame configured to rotate with respect to a rotation axis arranged in at least a part of the fixed frame is provided. The method includes outputting first content at least based on a first location of the variable frame with respect to the fixed frame, the first location corresponding to a first range, and outputting second content corresponding to the first content at least based on a second location of the variable frame with respect to the fixed frame, the second location corresponding to a second range.

In accordance with another aspect of the present disclosure, an electronic device is provided. The electronic device includes a fixed frame configured to be worn on a head of a user, a variable frame configured to rotate with respect to a rotation axis arranged in at least a part of the fixed frame and be electrically connected to an external electronic device, and a processor configured to determine whether a location of the variable frame is changed based on the fixed frame, and when the location of the variable frame is changed, transmit a signal indicating the change in the location of the variable frame to the external electronic device.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIGS. 1A and 1B illustrate a structure of an electronic device according to various embodiments of the present disclosure;
FIG. 2 illustrates an example in which an electronic device receives an input according to an embodiment of the present disclosure;
FIG. 3 illustrates an example of a block diagram of an electronic device according to an embodiment of the present disclosure;
FIG. 4 illustrates another example of a block diagram of an electronic device according to an embodiment of the present disclosure;
FIG. 5 is a flowchart illustrating an example of a process in which an electronic device outputs content based on a location of a variable frame according to an embodiment of the present disclosure;
FIG. 6 is a flowchart illustrating a process in which an electronic device outputs content in a virtual reality mode according to an embodiment of the present disclosure;
FIG. 7 illustrates a form in which an electronic device operates in a virtual reality mode according to an embodiment of the present disclosure;
FIG. 8 is a flowchart illustrating a process in which an electronic device outputs content in an audio mode according to an embodiment of the present disclosure;
FIG. 9 illustrates a form in which an electronic device operates in an audio mode according to an embodiment of the present disclosure;
FIG. 10 is a flowchart illustrating a process in which an electronic device detects whether a mode is switched according to an embodiment of the present disclosure;
FIGS. 11A and 11B illustrate a form in which a location of a variable frame is changed in an electronic device according to an embodiment of the present disclosure;
FIG. 12 is a flowchart illustrating a process in which an electronic device outputs content in a switched mode according to an embodiment of the present disclosure;
FIGS. 13A and 13B illustrate a concept in which an electronic device outputs content based on mode switching according to an embodiment of the present disclosure;
FIG. 14 is a flowchart illustrating a process in which an electronic device outputs content in a switched mode according to an embodiment of the present disclosure;
FIG. 15 is a flowchart illustrating an example in which an electronic device outputs content based on a location of a variable frame according to an embodiment of the present disclosure; and
FIGS. 16A and 16B illustrate a concept in which an output of content is controlled according to mode switching in an electronic device according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the present disclosure, an expression such as "A or B," "at least one of A and B," or "one or more of A and B" may include all possible combinations of the listed items. Expressions such as "first," "second," "primarily," or "secondary," as used herein, may represent various elements regardless of order and/or importance and do not limit corresponding elements. The expressions may be used for distinguishing one element from another element. When it is described that an element (such as a first element) is "(operatively or communicatively) coupled" to or "connected" to another element (such as a second element), the element can be directly connected to the other element or can be connected through another element (such as a third element).

An expression "configured to (or set)" used in the present disclosure may be used interchangeably with, for example, "suitable for," "having the capacity to," "designed to," "adapted to," "made to," or "capable of' according to a situation. A term "configured to (or set)" does not only mean "specifically designed to" by hardware. Alternatively, in some situations, the expression "apparatus configured to" may mean that the apparatus "can" operate together with another apparatus or component. For example, a phrase "a processor configured (or set) to perform A, B, and C" may be a generic-purpose processor (such as a central processing unit (CPU) or an application processor (AP)) that can perform a corresponding operation by executing at least one software program stored at an exclusive processor (such as an embedded processor) for performing a corresponding operation or at a memory device.

An electronic device according to embodiments of the present disclosure, may be embodied as, for example, at least one of a smart phone, a tablet personal computer (PC), a mobile phone, a video phone, an e-book reader, a desktop PC, a laptop PC, a netbook computer, a workstation, a server, a personal digital assistant (PDA), a portable multimedia player (PMP), an MPEG 3 (MP3) player, a medical equipment, a camera, and a wearable device. The wearable device can include at least one of an accessory type (e.g., a watch, a ring, a bracelet, an ankle bracelet, a necklace, glasses, a contact lens, or a head-mounted-device (HMD)), a fabric or clothing embedded type (e.g., electronic garments), a body attachable type (e.g., a skin pad or a tattoo), and an implantable circuit. The electronic device may be embodied as at least one of, for example, a television, a digital versatile disc (DVD) player, an audio device, a refrigerator, an air-conditioner, a cleaner, an oven, a microwave oven, a washing machine, an air cleaner, a set-top box, a home automation control panel, a security control panel, a media box (e.g., Samsung HomeSync™, Apple TV™, or Google TV™), a game console (e.g., Xbox™, PlayStation™), an electronic dictionary, an electronic key, a camcorder, and an electronic frame.

In another embodiment, the electronic device may be embodied as at least one of various medical devices (such as, various portable medical measuring devices (a blood sugar measuring device, a heartbeat measuring device, a blood pressure measuring device, or a body temperature measuring device), a magnetic resonance angiography (MRA) device, a magnetic resonance imaging (MRI) device, a computed tomography (CT) device, a scanning machine, and an ultrasonic wave device), a navigation device, a global navigation satellite system (GNSS), an event data recorder (EDR), a flight data recorder (FDR), a vehicle infotainment device, electronic equipment for a ship (such as, a navigation device for ship and a gyro compass), avionics, a security device, a head unit for a vehicle, an industrial or home robot, a drone, an automated teller machine (ATM) of a financial institution, a point of sales (POS) device of a store, and an internet of things (IoT) device (e.g., a light bulb, various sensors, a sprinkler device, a fire alarm, a thermostat, a street light, a toaster, sports equipment, a hot water tank, a heater, and a boiler). According to an embodiment, the electronic device may be embodied as at least one of a portion of furniture, building/construction or vehicle, an electronic board, an electronic signature receiving device, a projector, and various measuring devices (e.g., water supply, electricity, gas, or electric wave measuring device). An electronic device, according to an embodiment, can be a flexible electronic device or a combination of two or more of the foregoing various devices. An electronic device, according to an embodiment of the present disclosure, is not limited to the foregoing devices may be embodied as a newly developed electronic device. The term "user," as used herein, can refer to a person using an electronic device or a device using an electronic device (e.g., an artificial intelligence electronic device).

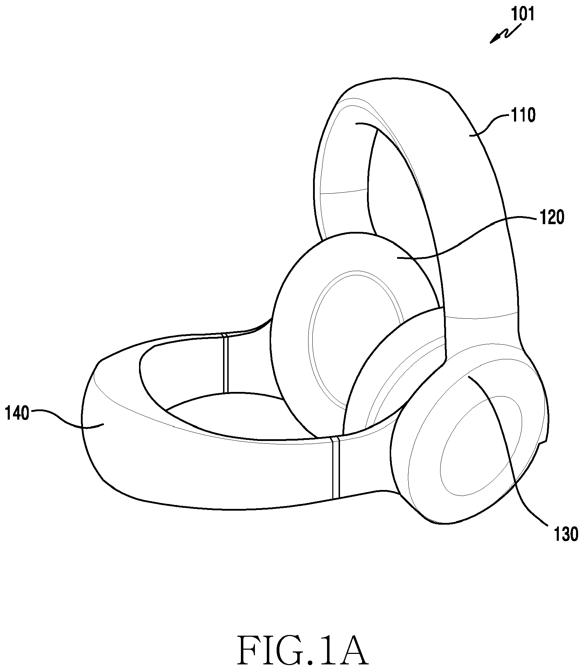

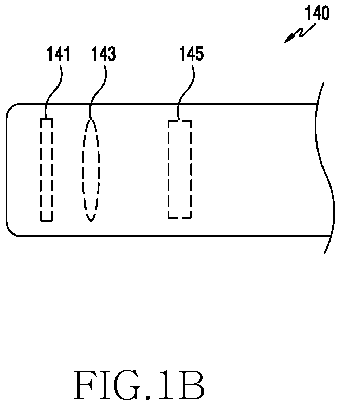

FIGS. 1A and 1B illustrate a structure of an electronic device according to various embodiments of the present disclosure.

Referring to FIG. 1A, an electronic device 101 may include a fixed frame 110, a speaker 120, a rotation axis 130, and a variable frame 140. In some embodiments, the electronic device 101 may further include an input device (not shown) (for example, a touch sensor, an input key, or a biometric sensor) and a microphone (not shown), selectively. The electronic device, according to various embodiments, may further include at least one wireless communication module for receiving content from an external device.

For example, the fixed frame 110 may adhere to the user's head so that the electronic device 101 is worn on the user's head. The fixed frame 110 may be connected to, for example, the speaker 120. In this case, the fixed frame 110 has an adjustable length to be seated on the user's head according to physical features of the user. According to an embodiment, the fixed frame 110 may include an elastic material.

The speaker 120 may output a sound of content stored in the electronic device 101 or content received from an external electronic device (for example, through a communication module). In another example, when the electronic device 101 includes a microphone, the speaker 120 may output an external sound received through the microphone.

The rotation axis 130 may be connected to the variable frame 140 and may include a rotation sensor for detecting an angle of the variable frame 140 that rotates with respect to at least a part of the fixed frame 110.

The variable frame 140 may rotate with respect to the rotation axis 130 arranged in at least the part of the fixed frame 110 according to a user's control. The variable frame 140 may include, for example, a display for providing an image.

Referring to FIG. 1B, for example, the variable frame 140 may include a display 141 for providing content, a lens 143 for controlling the focus, and a lens protector 145 for protecting the lens 143, as illustrated in FIG. 1B. In this case, the variable frame 140 may display content stored in the electronic device 101 or content received from an external electronic device through the display. According to an embodiment, the variable frame 140 may have an adjustable length according to physical features of the user or user preference. According to an embodiment, the variable frame 140 may include an input device for receiving a user input. For example, the variable frame 140 may include at least one of a physical key, a touch pad, a joystick, and a wheel key.

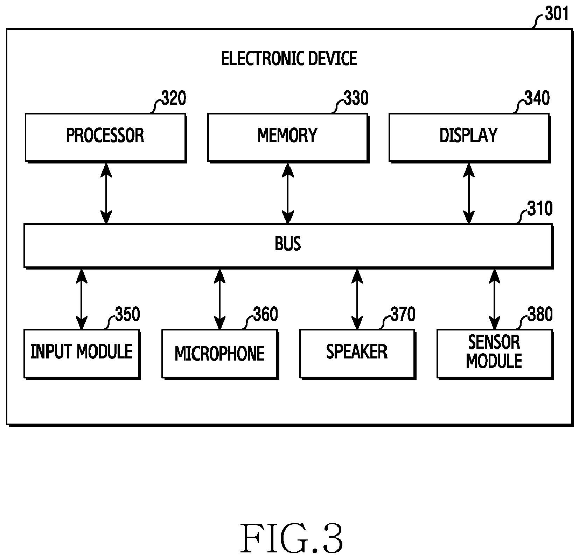

According to an embodiment, the variable frame 140 may include a space or a structure (for example, an accommodation portion) for accommodating a display device. In this case, the variable frame 140 may further include a connector for electrical connection with the display device. For example, when an external electronic device for outputting content is connected to the accommodation portion of the variable frame 140, a processor 320 (FIG. 3) may provide a rotation angle of the variable frame 140 to the external electronic device. In another example, when a location of the variable frame is changed to a range corresponding to a second mode from a range corresponding to a first mode in the state in which the external electronic device for outputting content is connected to the accommodation portion of the variable frame 140, the processor 320 may transmit a signal indicating the change in the location of the variable frame to the external electronic device.

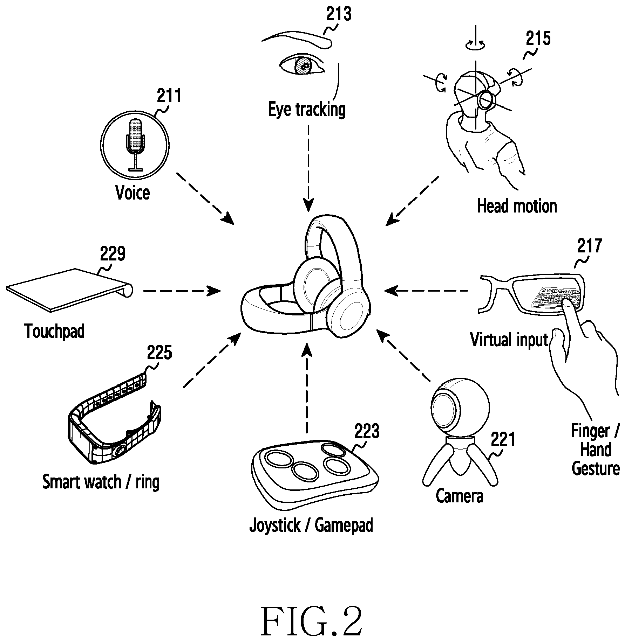

FIG. 2 illustrates an example in which an electronic device receives an input according to an embodiment of the present disclosure. Hereinafter, the electronic device may include all or some elements of the electronic device 101 illustrated in FIG. 1.

Referring to FIG. 2, an electronic device 201 may receive input information for controlling the electronic device 201. According to an embodiment, the electronic device 201 may receive input information through elements of the electronic device 201 (for example, a microphone, an eye tracking module, an acceleration sensor, a gyro sensor, and a virtual input module). For example, the electronic device 201 may receive voice information 211 through the microphone. The electronic device 201 may use the voice information 211 as input information. In another example, the electronic device 201 may detect a movement 213 of the user's eye through the eye tracking module. The electronic device 201 may use the movement 213 of the user's eye as input information. In another example, the electronic device 201 may detect a movement 215 of the user's head wearing the electronic device 201 through the acceleration sensor, the gyro sensor, or a geomagnetic sensor. The electronic device 201 may use the movement 215 of the user's head as input information. In another example, the electronic device 201 may detect a movement 217 of the user's hand or finger through a camera module or a gesture sensor. The electronic device 201 may use the movement 217 of the user's hand or finger as input information.

According to an embodiment, the electronic device 201 may receive input information from the external electronic device connected through a wire or wirelessly. For example, the electronic device 201 may be connected to a camera 221, a joystick 223, a smart watch (or ring) 225, or a touch pad 229 through a wire or wirelessly. The electronic device 201 may receive input information attributable to the control or movement of the user from the camera 221, the joystick 223, the smart watch (or ring) 225, or the touch pad 229 connected through a wire or wirelessly.

According to an embodiment, the electronic device 201 may use a relative coordinate (for example, a distance or a location information relation) between the electronic device 201 and the external electronic device, recognized using ultrasonic waves or a magnetic field as input information. For example, after outputting ultrasonic waves, the electronic device 201 may receive ultrasonic waves reflected by the external electronic device through the microphone. The electronic device 201 may calculate the relative coordinate between the electronic device 201 and the external electronic device based on the received ultrasonic waves. The electronic device 201 may use the relative coordinate as input information.

FIG. 3 is a block diagram of an electronic device according to an embodiment of the present disclosure. Hereinafter, an electronic device 301 may include all or some elements of the electronic device 101 of FIG. 1 or the electronic device 201 of FIG. 2.

Referring to FIG. 3, the electronic device 301 may include a bus 310, the processor 320, a memory 330, a display 340, an input module 350, a microphone 360, a speaker 370, and a sensor module 380. In some embodiments, the electronic device 101 may omit at least one of the elements, or may further include other elements.

The bus 310 may interconnects the processor 320, the memory 330, the display 340, the input module 350, the microphone 360, the speaker 370, and the sensor module 380 and include a circuit that transfers communication (for example, control messages or data) between these elements.

The processor 320 may include one or more of a CPU, an AP, and a micro controller unit (MCU). The processor 320 may include, for example, a plurality of lower processors, and at least some of the plurality of lower processors may execute calculations for controlling at least one other element of the electronic device 301 or data processing. According to an embodiment, when the electronic device 301 includes a communication module (not shown), the processor 320 may include a communication processor (CP).

According to an embodiment, the processor 320 may output content corresponding to the location of the variable frame of the electronic device 301. For example, the processor 320 may identify the location of the variable frame (for example, the variable frame 140 of FIG. 1A) rotating with respect to the rotation axis arranged in at least one part of the fixed frame. When the location of the variable frame is included within a range corresponding to a virtual reality mode, the processor 320 may control at least one of the display 340 and the speaker 370 such that content (for example, audio content, video content, or multimedia content) corresponding to the virtual reality mode is output. In this case, the processor 320 may determine that the electronic device 301 operates in the virtual reality mode. When the location of the variable frame is included within a range corresponding to an audio mode, the processor 320 may control the speaker 370 such that content (for example, audio content) corresponding to the audio mode is output. In this case, the processor 320 may determine that the electronic device 301 operates in the audio mode. Here, the location of the variable frame may be identified based on sensing information of the sensor module 380. For example, the processor 320 may identify an angle of the variable frame through a rotation sensor included in the rotation axis. The processor 320 may determine the location of the variable frame based on the angle of the variable frame. In another example, the processor 320 may identify a switch from which pressure due to the rotation of the variable frame is detected among a plurality of switches included in the fixed frame, the rotation axis, or the variable frame to recognize the location of the variable frame.

According to an embodiment, the processor 320 may determine whether the location of the variable frame is changed. For example, the processor 320 may identify the location of the variable frame based on sensing information of the sensor module 380. The processor 320 may determine whether the location of the variable frame is changed from the range corresponding to the audio mode to the range corresponding to the virtual reality mode. The sensor module 380 may include a rotation sensor or a plurality of switches for measuring the rotated angle of the variable frame.

According to an embodiment, when the location of the variable frame is changed, the processor 320 may output content corresponding to the content that has been output before the location of the variable frame is changed. For example, when the location of the variable frame is changed from the range corresponding to the audio mode to the range corresponding to the virtual reality mode, the processor 320 may switch the operation mode of the electronic device 301 from the audio mode to the virtual reality mode. The processor 320 may determine multimedia content corresponding to the audio content output in the audio mode. The processor 320 may control at least one of the display 340 and the speaker 370 such that the multimedia content is output. In another example, when the location of the variable frame is changed from the range corresponding to the virtual reality mode to the range corresponding to the audio mode, the processor 320 may switch the operation mode of the electronic device from the virtual reality mode to the audio mode. The processor 320 may transmit a signal indicating the change in the location of the variable frame to the external electronic device that is communication-connected with the electronic device 301. The processor 320 may receive audio content corresponding to the multimedia content output in the virtual reality mode from the external electronic device. The processor 320 may control the speaker 370 to output the audio content.

According to an embodiment, the processor 320 may detect the switching to an idle mode based on the location of the variable frame rotating with respect to the rotation axis included in at least one part of the fixed frame. For example, when the location of the variable frame rotating with respect to the rotation axis included in at least one part of the fixed frame is not included within the range corresponding to the virtual reality mode or the audio mode (or when the location is included within a range corresponding to the idle mode), the processor 320 may detect the switching to the idle mode. In another example, when no pressure is detected from the plurality of switches included in the fixed frame, the rotation axis, or the variable frame, the processor 320 may detect the switching to the idle mode. In this case, the processor 320 may control at least one of the display 340 and the speaker 370 such that the output of content, which has been output before the change in the location of the variable frame, is stopped and store information related to the reproduction of the content, of which the output is stopped, in the memory 330. The processor 320 may transition at least some of a plurality of lower processors included in the processor 320 into a sleep state in response to the stopping of the output of the content. In this case, some lower processors remaining in an active state may control the speaker 370 to output a sound received from the microphone 360.

According to an embodiment, when the location of the variable frame is changed during the idle mode, the processor 320 may control at least one of the display 340 and the speaker 370 to output the content. For example, the processor 320 may determine whether the variable frame rotates during the idle mode. When the variable frame rotates, the processor 320 may determine whether the location of the variable frame is changed to the range corresponding to the virtual reality mode or the audio mode. When the location of the variable frame is changed to the range corresponding to the virtual reality mode or the audio mode, the processor 320 may control at least one of the display 340 and the speaker 370 to output the content after the output of the content is stopped based on information related to the reproduction of the content stored in the memory 330.

The memory 330 may include a volatile and/or non-volatile memory. The memory 330 may store, for example, instructions or data relevant to at least one other element of the electronic device 301. According to an embodiment, the memory 330 may store software and/or a program. The program may include, for example, a kernel, middleware, an application programming interface (API), and/or an application program (or application). The kernel may control or manage, for example, system resources (for example, the bus 310, the processor 320, the memory 330, and the like) that are used to execute operations or functions implemented in the other programs (for example, the middleware, the API, and the application program). Furthermore, the kernel may provide an interface through which the middleware, the API, or the application program may access the individual elements of the electronic device 301 to control or manage the system resources. The middleware may serve as, for example, an intermediary that allows the API or the application program with the kernel to exchange data. Further, the middleware may process one or more task requests received from the application program according to priorities thereof. For example, the middleware may assign the priority for using the system resources (for example, the bus 310, the processor 320, and the memory 330) of the electronic device 301 to at least one of the application programs and process the one or more task requests. The API corresponds to an interface for allowing the application program to control functions provided by the kernel or the middleware, and may include, for example, at least one interface or function (for example, instruction) for file control, window control, image processing, or text control.

The display 340 may include, for example, a liquid crystal display (LCD), a light emitting diode (LED) display, an organic light emitting diode (OLED) display, a micro electro mechanical system (MEMS) display, or an electronic paper display. The display 340 may display, for example, various types of content (for example, text, images, videos, icons, and/or symbols) for a user.

The input module 350 may include various types of input devices for controlling the electronic device 301. For example, the input module 350 may include at least one of a physical key, a physical button, a touch key, a joystick, a wheel key, and a touch pad. In another example, the input module 350 may include a touch panel for detecting a touch input and a hovering input of the user. The input module 350 may be included in, for example, the variable frame 140 of the electronic device 101 of FIG. 1A.

The microphone 360 may receive a user input for controlling the electronic device or an external sound. For example, when the electronic device 301 operates in the virtual reality mode or the audio mode, the microphone 360 may extract a user input (for example, a user's voice) from the received external sound. In another example, when the electronic device 301 operates in the idle mode, the microphone 360 may receive an external sound. According to an embodiment, when the electronic device 301 operates in the virtual reality mode, the microphone 360 may be deactivated under the control of the processor 320. The speaker 370 may convert electrical signals received from other elements of the electronic device 301 into sounds.

The sensor module 380 may acquire motion information of the electronic device 301. For example, the sensor module 380 may identify motion information of the electronic device 301 (or the user using the electronic device) and the location of the variable frame through a gesture sensor, a gyro sensor, an acceleration sensor, a geomagnetic sensor, a rotation sensor, and a switch. For example, the sensor module 380 may detect a movement of the user's hand or finger through the gesture sensor. For example, the sensor module 380 may detect a movement of the user's head wearing the electronic device 301 through at least one of the gyro sensor, the acceleration sensor, and the geomagnetic sensor. For example, the sensor module 380 may identify the location of the variable frame rotating with respect to the rotation axis arranged in at least one part of the fixed frame through the rotation sensor or the switch.

According to an embodiment, the display 340 may be included in an external electronic device connected to the electronic device 301. In this case, the processor 320 may provide the location of the variable frame to the external electronic device connected to the variable frame or transmit a signal indicating the change in the location of the variable frame to the external electronic device. For example, when the variable frame rotates with respect to the rotation axis arranged in at least the part of the fixed frame, the processor 320 may identify a rotated angle of the variable frame. The processor 320 may transmit the rotated angle of the variable frame to the external electronic device. In this case, the external electronic device may determine whether the location of the variable frame is changed from the range corresponding to the first mode to the range corresponding to the second mode based on the signal received from the electronic device 301. In another example, when the location of the variable frame is changed from the range corresponding to the first mode to the range corresponding to the second mode, the processor 320 may determine that the location of the variable frame is changed. When the location of the variable frame is changed, the processor 320 may provide a signal indicating that the variable frame is changed to the range corresponding to the second mode to the external electronic device.

According to an embodiment, when the external electronic device is connected to the variable frame of the electronic device 301, the external electronic device may output content based on a signal transmitted from the electronic device 301. For example, the external electronic device may identify the location of the variable frame based on a signal related to the location of the variable frame transmitted from the electronic device 301. The external electronic device may output first content based on the location of the variable frame. For example, when the location of the variable frame is included within the range corresponding to the virtual reality mode, the external electronic device may output an image and a sound of the content. For example, when the location of the variable frame is included within the range corresponding to the virtual reality mode, the external electronic device may output the image of the content and transmit information related to the content to the electronic device 301 such that the electronic device 301 outputs the sound of the content.

According to an embodiment, the external electronic device may determine whether the location of the variable frame is changed based on the signal received from the electronic device 301. For example, the external electronic device may determine whether the location of the variable frame is changed based on the signal related to the location of the variable frame received from the electronic device 301. For example, the external electronic device may determine that the location of the variable frame is changed from the range corresponding to the audio mode to the range corresponding to the virtual reality mode based on the signal related to the location of the variable frame transmitted from the electronic device 301. In another example, the external electronic device may determine whether the location of the variable frame is changed based on whether the signal indicating the change in the location of the variable frame is received from the electronic device 301.

According to an embodiment, when the location of the variable frame is changed, the external electronic device may output second content corresponding to the first content, which has been output before the location of the variable frame is changed. For example, when the location of the variable frame is changed from the range corresponding to the audio mode to the range corresponding to the virtual reality mode, the external electronic device may determine content to be output in the virtual reality mode based on the content output in the audio mode. The external electronic device may output the determined content. For example, the external electronic device may output an image and a sound of multimedia content corresponding to the audio content output in the audio mode. For example, the external electronic device may output the image of the multimedia content corresponding to the audio content output in the audio mode and transmit information related to the multimedia content to the electronic device 301 such that the electronic device 301 outputs the sound of the multimedia content.

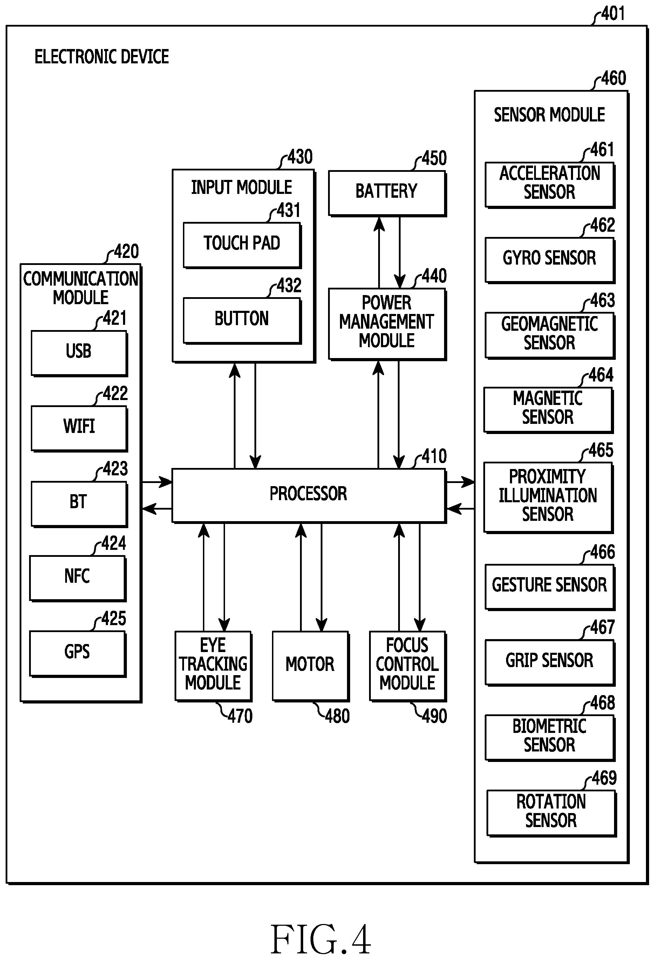

FIG. 4 is a block diagram of an electronic device according to an embodiment of the present disclosure. Hereinafter, the electronic device may include all or some elements of the electronic device 301 of FIG. 3.

Referring to FIG. 4, an electronic device 401 may include a processor 410, a communication module 420, an input module 430, a power management module 440, a battery 450, a sensor module 460, an eye tracking module (eye tracker) 470, a motor (vibrator) 480, a focus control module (adjustable optics or lens assembly) 490. In some embodiments, the electronic device 401 may omit at least one of these elements, or may further include other elements. In another embodiment, at least one of these elements may be included in a display device connected to a variable frame of the electronic device 401.

The processor 410 may drive an operating system (OS) or an embedded software program to control a plurality of hardware components connected to the processor. The processor 410 may be configured by a plurality of lower processors and may activate only some of the plurality of lower processors.

The communication module 420 may electrically connect the electronic device 401 and an external electronic device (for example, a portable terminal) through a wired and/or wireless communication to transmit or receive data. According to an embodiment, the communication module 420 may include a USB module 421, a Wi-Fi module 422, a bluetooth (BT) module 423, an NFC module 424, and a GPS module 425. According to an embodiment, at least some of the Wi-Fi module 422, the BT module 423, the NFC module 424, and the GPS module 425 may be included within one integrated chip (IC) or IC package.

The input module 430 may include at least one of a touch pad 431 and a button 432. The touch pad 431 may detect a touch input through, for example, at least one of a capacitive type, a resistive type, an infrared type, and an ultrasonic wave type. The touch pad 431 may further include a control circuit. The touch panel 431 may further include a tactile layer. In this case, the touch pad 431 may provide a tactile reaction to the user. The button 432 may include, for example, a physical button, an optic key, or a keypad.

The power management module 440 may manage, for example, power of the electronic device 401. According to an embodiment, the power management module 440 may include a power management integrated circuit (PMIC), a charger IC, or a fuel gauge. The battery 450 may include, for example, a rechargeable battery and/or a solar battery. According to an embodiment, the battery may be included in the power management module 440.

The sensor module 460 may measure a physical quantity or sense an operation state of the electronic device 401 and may convert the measured or sensed information to an electric signal. The sensor module 460 may include, for example, at least one of an acceleration sensor 461, a gyro sensor 462, a geomagnetic sensor 463, a magnetic sensor 464, a proximity illumination sensor 465, a gesture sensor 466, a grip sensor 467, a biometric sensor 468, and a rotation sensor 469. The sensor module 460 may detect a movement of the user's head wearing the electronic device 401 through, for example, at least one of the acceleration sensor 461, the gyro sensor 462, and the geomagnetic sensor 463. The sensor module 460 may detect whether the electronic device 401 is worn through, for example, the grip sensor 467 (or proximity sensor). The sensor module 460 may detect a movement of the user's hand or finger through, for example, the gesture sensor 466. Additionally or alternatively, the sensor module 460 may recognize a user's biometric information through, for example, a biometric sensor 468 (for example, an e-nose sensor, an electromyography (EMG) sensor, an electroencephalogram (EEG) sensor, an electrocardiogram (ECG) sensor, or an iris sensor). The sensor module 460 may further include a control circuit for controlling one or more sensors included therein.

The eye tracking module 470 (eye tracker) may track a user's eyes through, for example, at least one of an electrical oculography (EOG) sensor, coil systems, dual Purkinje systems, bright pupil systems, and dark pupil systems. The eye tracking module 470 may further include a micro camera for tracking eyes. The motor 480 may convert, for example, an electrical signal into a mechanical vibration. For example, the motor 480 may generate a vibration or a haptic effect.

The focus control module 490 may measure an inter-pupil distance (IPD) of the user to control a distance of the lens and a location of a display (not shown) in order to enable the user to view an image suitable for the user's eye sight. The display may be included in an external electronic device (for example, a portable terminal) connected to the variable frame (the variable frame 140 of FIG. 1A) of the electronic device 401.

According to various embodiments of the present disclosure, an electronic may include a fixed frame worn on a user's head, a variable frame rotating with respect to a rotation axis arranged in at least a part of the fixed frame, and a processor configured to output first content at least based on a location of the variable frame with respect to the fixed frame corresponding to a first range and output second content corresponding to the first content at least based on a location of the variable frame with respect the fixed frame corresponding to a second range.

According to various embodiments, the processor may be configured to output an interface for providing at least one content at least based on the location of the variable frame corresponding to the first range and output the first content among the at least one content based on a user input corresponding to the interface.

According to various embodiments, the at least one content may include content stored in a memory of the electronic device or content stored in an external electronic device communication-connected with the electronic device.

According to various embodiments, the electronic device may further include a sensor module, and the processor may be configured to acquire location information of the variable frame based on sensing information of the sensor module.

According to various embodiments, the processor may be configured to operate in a virtual reality mode when the location of the variable frame corresponds to the first range and operate in an audio mode when the location of the variable frame corresponds to the second mode.

According to various embodiments, the processor may be configured to, when the location of the variable frame is changed from the first range to the second range, acquire the second content corresponding to the first content from a memory of the electronic device and output the second content.

According to various embodiments, the processor may be configured to acquire the second content corresponding to the first content from an external electronic device functionally connected to the electronic device and output the second content.

According to various embodiments, the variable frame may further include an accommodation portion for connection with a display device.

According to various embodiments, the processor may be configured to stop outputting the first content or the second content at least based on a location of the variable frame for the fixed frame corresponding to a third range and store information related to reproduction of the first content or the second content in a memory of the electronic device.

According to various embodiments, the electronic device may further include a microphone, and a speaker. The processor may be configured to control the speaker to output a sound received through the microphone at least based on the location of the variable frame for the fixed frame corresponding to the third range.

According to various embodiments, the processor may be configured to output the first content based on the information related to the reproduction of the first content when the location of the variable frame for the fixed frame is changed to the first range, and output the second content corresponding to the first content based on the reproduction of the first content when the location of the variable frame for the fixed frame is changed to the second range.

According to various embodiments of the present disclosure, an electronic device may include a fixed frame worn on a user's head, a variable frame rotating with respect to a rotation axis arranged in at least a part of the fixed frame and electrically connected to an external electronic device, and a processor configured to determine whether a location of the variable frame is changed based on the fixed frame, and, when the location of the variable frame is changed, transmit a signal indicating the change in the location of the variable frame to the external electronic device.

According to various embodiments, the processor may be configured to transmit the signal indicating the change in the location of the variable frame to the external electronic device when the location of the variable frame is changed from a first range to a second range.

According to various embodiments, the electronic device may further include a speaker. The processor may be configured to receive a signal related to first content from the external electronic device at least based on the location of the variable frame corresponding to the first range and control the speaker to output the first content based on the received signal.

According to various embodiments, the processor may be configured to, when the location of the variable frame is changed from the first range to the second range, receive a signal related to second content corresponding to the first content from the external electronic device and control the speaker to output the second content based on the received signal.

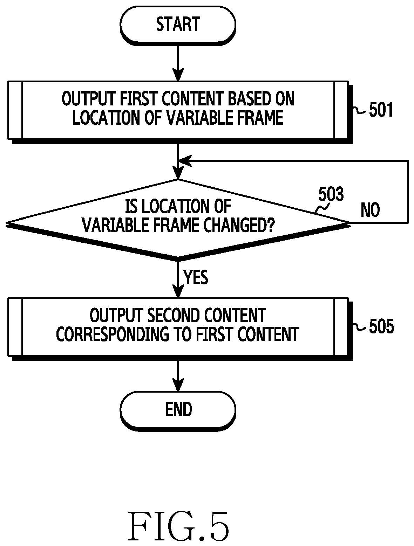

FIG. 5 illustrates an example of a flowchart for a process in which the electronic device outputs content based on a location of a variable frame according to an embodiment of the present disclosure. Hereinafter, the electronic device may include all or some elements of the electronic device 301 of FIG. 3 or the electronic device 401 of FIG. 4.

Referring to FIG. 5, the electronic device may output first content based on the location of the variable frame, in operation 501. For example, the processor 320 of the electronic device 301 may identify the location of the variable frame of the electronic device 301 rotating with respect to the rotation axis arranged in at least the part of the fixed frame of the electronic device 301. The processor 320 may determine whether the location of the variable frame is included within the range corresponding to the virtual reality mode. When the location of the variable frame is included within the range corresponding to the virtual reality mode, the processor 320 may determine that the electronic device 301 operates in the virtual reality mode and control the display 340 to display a visual interface that provides information on at least one content (for example, multimedia content) corresponding to the virtual reality mode. The processor 320 may control at least one of the display 340 and the speaker 370 to output content corresponding to a user input among at least one content provided through the visual interface. In another example, the processor 320 may identify the location of the variable frame rotating with respect to the rotation axis arranged in at least the part of the fixed frame. When the location of the variable frame is included within the range corresponding to the audio mode, the processor 320 may determine that the electronic device 301 operates in the audio mode and control the speaker 370 to output an audio interface that provides information on at least one content (for example, audio content) corresponding to the audio mode. The processor 320 may control the speaker 370 to output the content corresponding to a user input among at least one content provided through the audio interface. The variable frame may include a display for displaying an image of the content or a connector that may be connected to an external device including a display for displaying the image of the content. The location of the variable frame may be acquired through a plurality of switches included in the fixed frame, the rotation axis, or the variable frame or through a rotation sensor included in the rotation axis.

The electronic device may determine whether the location of the variable frame is changed, in operation 503. For example, when the variable frame rotates, the processor 320 may determine whether the location of the variable frame is changed from the range corresponding to the virtual reality mode to the range corresponding to the audio mode. In another example, when the variable frame rotates, the processor 320 may determine whether the location of the variable frame is changed from the range corresponding to the audio mode to the range corresponding to the virtual reality mode. When the location of the variable frame is not changed to a range corresponding to another mode, the processor 320 may perform operation 503 of determining whether the location of the variable frame is changed again.

When the location of the variable frame is changed, the electronic device may output second content corresponding to the first content, in operation 505. For example, when the location of the variable frame is changed to the range corresponding from the virtual reality mode to the range corresponding to the audio mode, the processor 320 may load audio content corresponding to multimedia content output in the virtual reality mode from the memory 330 of the electronic device 301 or receive the audio content from the external electronic device connected through the communication module. The processor 320 may control the speaker 370 to output the audio content related to the multimedia content in the audio mode. In another example, when the location of the variable frame is changed from the range corresponding to the audio mode to the range corresponding to the virtual reality mode, the processor 320 may transmit a signal indicating that the electronic device 301 switches to the virtual reality mode to the external electronic device connection-connected to the electronic device 301. The processor 320 may receive multimedia content corresponding to audio content output in the audio mode from the external electronic device. The processor 320 may control at least one of the display 340 and the speaker 370 to output the multimedia content.

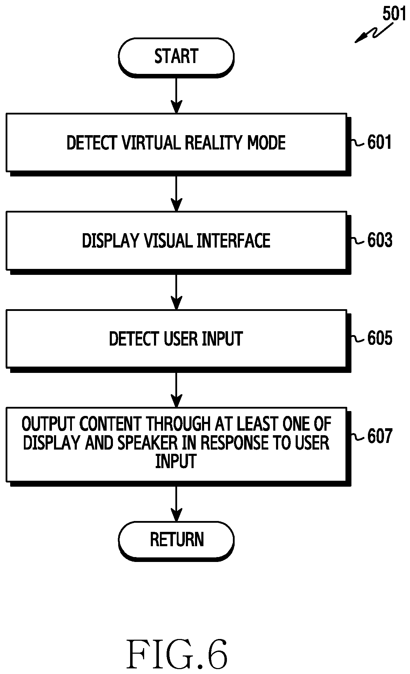

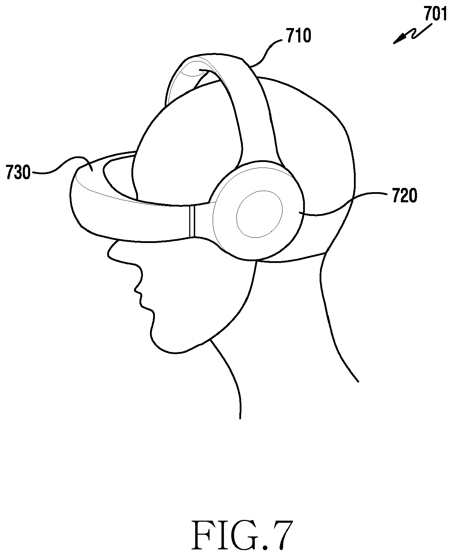

FIG. 6 is a flowchart illustrating a process in which an electronic device outputs content in a virtual reality mode according to an embodiment of the present disclosure. FIG. 7 illustrates a form in which an electronic device operates in a virtual reality mode according to an embodiment of the present disclosure. Hereinafter, operation 501 of FIG. 5 in which the first content is output based on the location of the variable frame will be described. In the following description, the electronic device may include all or some elements of the electronic device 301 of FIG. 3 or the electronic device 401 of FIG. 4.

Referring to FIGS. 6 and 7, the electronic device may detect the virtual reality mode based on the location of the variable frame, in operation 601. For example, when the location of the variable frame of the electronic device 301 rotating with respect to the rotation axis arranged in at least the part of the fixed frame of the electronic device 301 is included within the range corresponding to the virtual reality mode, the processor 320 of the electronic device 301 may determine that the virtual reality mode is detected. For example, the processor 320 may identify an angle of a variable frame 730 through a rotation sensor included in a rotation axis 720 of an electronic device 701, as illustrated in FIG. 7. When the angle of the variable frame 730 with respect to the fixed frame 710 is 90 degrees, the processor 320 may determine that the virtual reality mode is detected. The variable frame 730 may include a display (for example, the display 340) or a connector for the connection with an external electronic device including a display. The rotation axis 720 may further include a speaker (for example, the speaker 370) for outputting audio content. The range corresponding to the virtual reality mode may be changed by the user according to physical features or a preference of the user.

The electronic device may display a visual interface in response to the detection of the virtual reality mode, in operation 603. For example, the processor 320 may control the display 340 to display a list of content stored in the memory 330 of the electronic device 301 in response to the detection of the virtual reality mode. In another example, the processor 320 may control the display 340 to display a list of content stored in the external electronic device communication-connected to the electronic device 301 in response to the detection of the virtual reality mode. The content may include at least one of video content, audio content, and multimedia content. According to an embodiment, the processor 320 may control the speaker 370 to also provide voice information corresponding to the content when the visual interface is output.

The electronic device may detect a user input, in operation 605. For example, the processor 320 may detect a user input for executing at least one content included in the visual interface through the input module 350. According to an embodiment, when the electronic device 301 is functionally connected to the external electronic device (for example, a wearable device or an electronic device connected to a mode changeable frame), the processor 320 may execute at least one content included in the visual interface based on a signal received from the external electronic device.

The electronic device may output content through at least one of the display and the speaker in response to the user input, in operation 607. For example, the processor 320 may load, from the memory 330, content corresponding to the user input in the content list output through the display 340. The processor 320 may control at least one of the display 340 and the speaker 370 to output the content loaded from the memory 330. In another example, the processor 320 may receive content corresponding to a user input among content output through the display 340 from the external electronic device. The processor 320 may control at least one of the display 340 and the speaker 370 to output the received content.

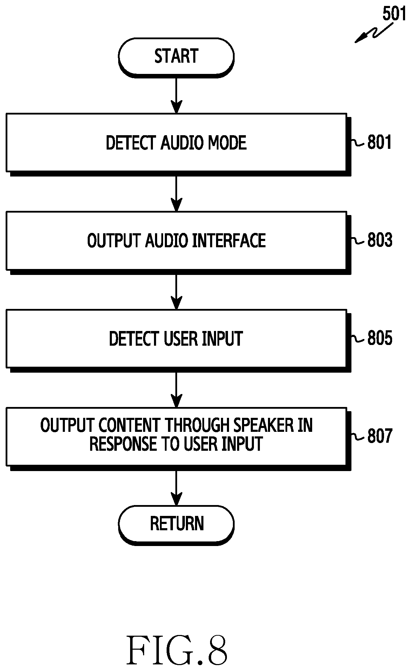

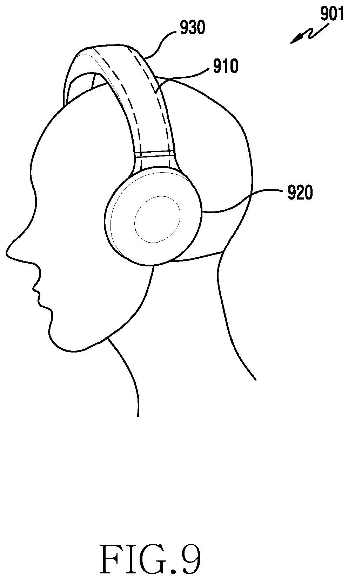

FIG. 8 is a flowchart illustrating a process in which an electronic device outputs content in an audio mode according to an embodiment of the present disclosure. FIG. 9 illustrates a form in which an electronic device operates in an audio mode according to an embodiment of the present disclosure. Hereinafter, operation 501 of FIG. 5 in which the first content is output based on the location of the variable frame will be described. In the following description, the electronic device may include all or some elements of the electronic device 301 of FIG. 3 or the electronic device 401 of FIG. 4.

Referring to FIGS. 8 and 9, the electronic device may determine the audio mode based on the location of the variable frame, in operation 801. For example, when the location of the variable frame of the electronic device rotating with respect to the rotation axis arranged in at least the part of the fixed frame of the electronic device 301 is included within the range corresponding to the audio mode, the processor 320 of the electronic device 301 may determine that the audio mode is detected. For example, as illustrated in FIG. 9, the processor 320 may measure an angle of a variable frame 930 based on a fixed frame 910 through a rotation sensor included in a rotation axis 920 of an electronic device 901. The processor 320 may determine that the audio mode is detected when the angle of the variable frame 930 with respect to the fixed frame is 0 degrees. The variable frame 930 may include, for example, the display 141, the lens 143, and the lens protector 145 as illustrated in FIG. 1B. The variable frame 930 may include, for example, a connector for the connection with a display device. The rotation axis 920 may include the rotation sensor for detecting the rotation angle of the variable frame 930 and a speaker for outputting audio content.

The electronic device may output an audio interface in response to the detection of the audio mode, in operation 803. For example, the processor 320 may identify at least one audio content among content stored in the memory 330 of the electronic device 301. The processor 320 may control the speaker 370 of the electronic device 301 to output information related to at least one audio content (for example, a content list) in the form of audio data. In another example, the processor 320 may identify at least one audio content among content stored in the external electronic device communication-connected to the electronic device 301. The processor 320 may control the speaker 370 to output information related to at least one audio content in the form of audio data. According to an embodiment, when the electronic device 301 is functionally connected to the external electronic device (for example, a wearable device or a display device connected to a mode changeable frame), the processor 320 may transmit information related to audio content to the external electronic device so that the information related to the audio content is displayed on the external electronic device.

The electronic device may detect a user input, in operation 805. For example, the processor 320 may receive a user's voice instruction for executing at least one content included in the audio interface through the microphone 360 of the electronic device 301. According to an embodiment, when the electronic device 301 is functionally connected to the external electronic device (for example, a wearable device or an electronic device connected to a variable frame), the processor 320 may receive an input signal for executing at least one content included in the audio interface from the external electronic device.

The electronic device may output content through the speaker in response to the user input, in operation 807. For example, the processor 320 may load audio content corresponding to the user input from the memory 330. The processor 320 may control the speaker 370 to output the audio content loaded from the memory 330. In another example, the processor 320 may receive audio content corresponding to the user input from the external electronic device functionally connected to the electronic device 301. The processor 320 may control the speaker 370 to output the audio content received from the external electronic device.

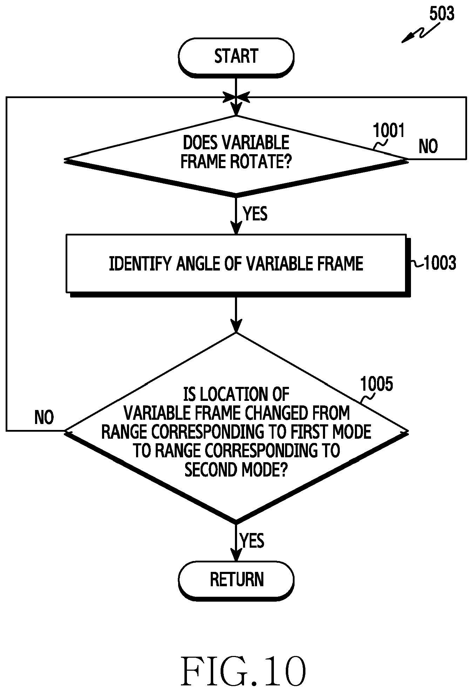

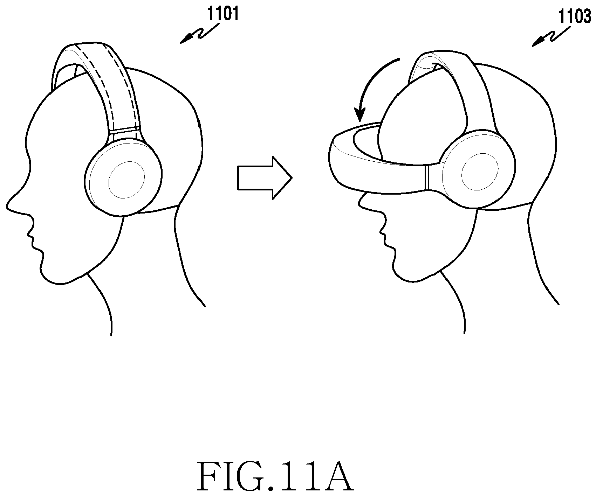

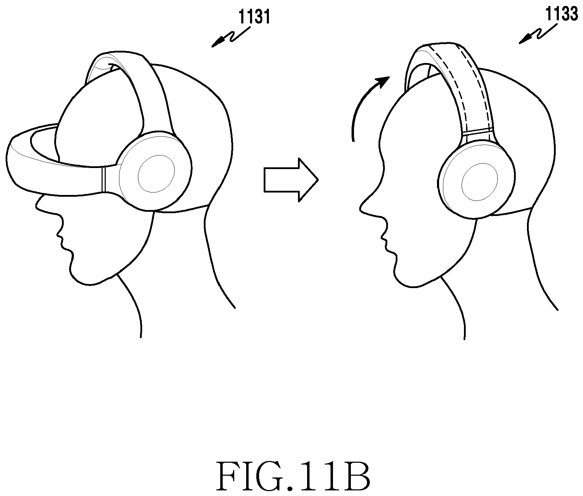

FIG. 10 is a flowchart illustrating a process in which an electronic device detects whether the mode is switched according to an embodiment of the present disclosure. FIGS. 11A and 11B illustrate a form in which a location of the variable frame is switched in an electronic device according to an embodiment of the present disclosure. Hereinafter, operation 503 of FIG. 5 of determining whether the location of the variable frame is changed will be described. In the following description, the electronic device may include all or some elements of the electronic device 301 of FIG. 3 or the electronic device 401 of FIG. 4.

Referring to FIGS. 10, 11A, and 11B, the electronic device may determine whether the variable frame rotates, in operation 1001. For example, the processor 320 of the electronic device 301 may determine whether the variable frame of the electronic device 301 rotates based on sensing information output from the sensor module 380.

When the variable frame rotates, the electronic device may identify an angle of the variable frame, in operation 1003. For example, the processor 320 may identify the angle of the variable frame rotating with respect to the rotation axis arranged in at least the part of the fixed frame through the rotation sensor included in the rotation axis 130 of the electronic device 101, as illustrated in FIG. 1A. In another example, the processor 320 may identify the angle of the variable frame based on pressure information of a plurality of switches included in the fixed frame 110, the rotation axis 130, or the variable frame 140 of the electronic device 101, as illustrated in FIG. 1A.

The electronic device may determine whether the location of the variable frame is changed from a range corresponding to a first mode to a range corresponding to a second mode based on the angle of the variable frame, in operation 1005. For example, as illustrated in FIG. 11A, the processor 320 may determine whether the location of the variable frame is changed from a range 1101 corresponding to the audio mode to a range 1103 corresponding to the virtual reality mode according to the rotation of the variable frame. In another example, as illustrated in FIG. 11B, the processor 320 may determine whether the location of the variable frame is changed from a range 1131 corresponding to the virtual reality mode to a range 1133 corresponding to the audio mode according to the rotation of the variable frame. When the location of the variable frame is changed to the range corresponding to the second mode, the processor 320 may perform operation 505 of FIG. 5 for outputting second content corresponding to first content. When the location of the variable frame is not included within the second range, the processor 320 may perform operation 1001 again for determining whether the variable frame rotates.

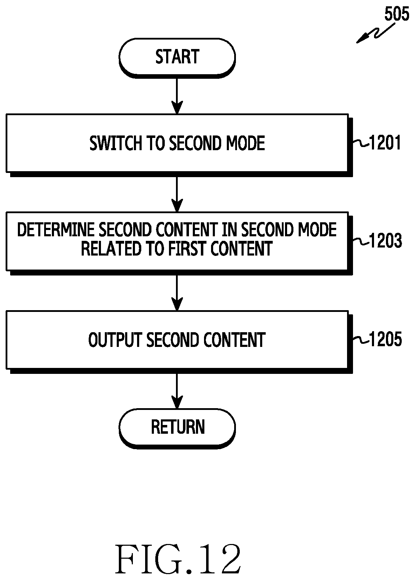

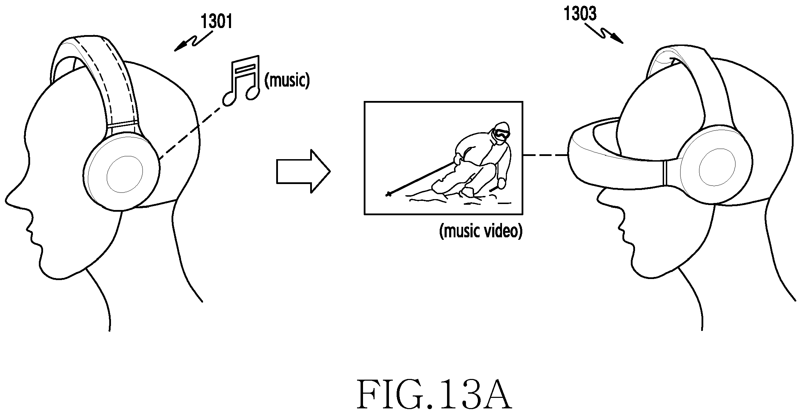

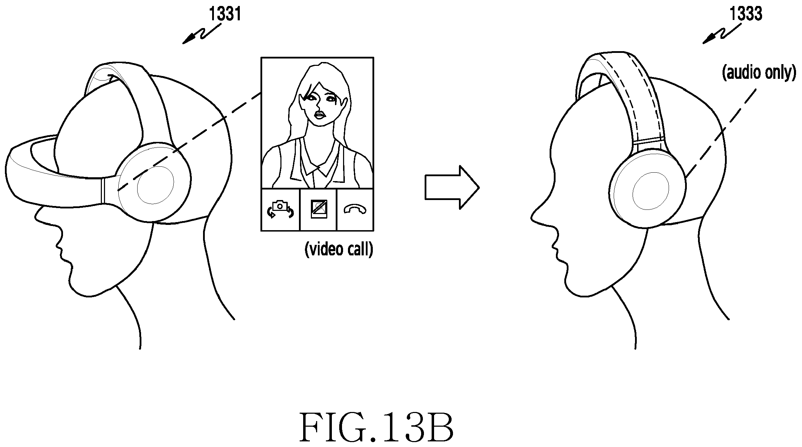

FIG. 12 is a flowchart illustrating a process in which an electronic device outputs content in a switched mode according to an embodiment of the present disclosure. FIGS. 13A and 13B illustrate a concept in which an electronic device outputs content based on a location of a variable frame according to various embodiments of the present disclosure. Hereinafter, operation 505 of FIG. 5 for outputting the second content corresponding to the first content will be described. In the following description, the electronic device may include all or some elements of the electronic device 301 of FIG. 3 or the electronic device 401 of FIG. 4.

Referring to FIG. 12, the electronic device may switch to the second mode, in operation 1201. For example, when the location of the variable frame is changed from the range corresponding to the first mode to the range corresponding to the second mode, the processor 320 of the electronic device 301 may switch to the operation mode of the electronic device 301 to the second mode. For example, when the location of the variable frame is changed from the range corresponding to the virtual reality mode to the range corresponding to the audio mode, the processor 320 may switch from the virtual reality mode to the audio mode.

The electronic device may determine second content in the second mode associated with first content, in operation 1203. For example, when the electronic device 301 in the state for outputting a movie in the virtual reality mode switches to the audio mode, the processor 320 may search for an original sound track (OST) of the movie in the memory 330 of the electronic device 301 or the external electronic device communication-connected to the electronic device 301. The processor 320 may determine the found OST of the movie as content to be reproduced in the audio mode. In another example, when the electronic device 301 in the state of outputting music in the audio mode switches to the virtual reality mode, the processor 320 may search for music-related content such as a singer and lyrics of the music in the memory 330 or the external electronic device communication-connected to the electronic device 301. The processor 320 may determine the found content as content in the virtual reality mode. In another example, when the electronic device 301 switches to the audio mode while a video call is performed in the virtual reality mode, the processor 320 may determine voice information of the video call as second content.

Referring to FIGS. 12, 13A, and 13B, the electronic device may output the second content, in operation 1205. For example, as illustrated in FIG. 13A, when the electronic device 301 switches to the virtual reality mode while music is output through the speaker 370 in the audio mode, as indicated by reference numerals 1301 and 1303, the processor 320 may control the display 340 to output a music video of the music, as indicated by reference numeral 1303. In this case, the processor 320 may control the speaker 370 to continuously output the music. In another example, as illustrated in FIG. 13B, when the electronic device 301 switches to the audio mode while the video call is performed in the virtual reality mode, as indicated by reference numerals 1331 and 1333, the processor 320 may control the display 340 to not output the image of the video call, as indicated by reference numeral 1333. In this case, the processor 320 may control the speaker 370 to continuously output the voice in the call.

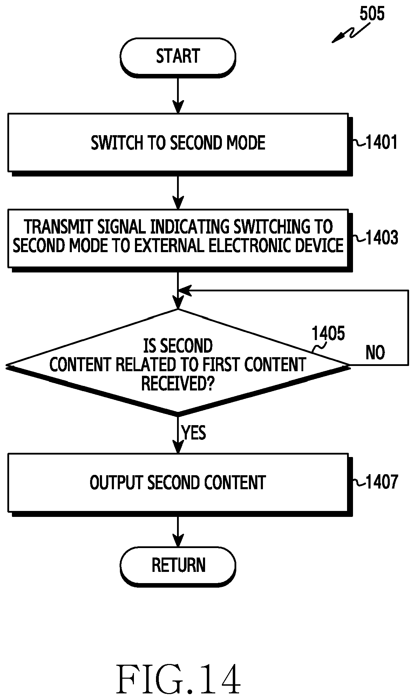

FIG. 14 is a flowchart illustrating a process in which an electronic device outputs content in a switched mode according to an embodiment of the present disclosure. Hereinafter, operation 505 of FIG. 5 for outputting the second content corresponding to the first content will be described. In the following description, the electronic device may include all or some elements of the electronic device 301 of FIG. 3 or the electronic device 401 of FIG. 4.

Referring to FIG. 14, the electronic device may switch to the second mode, in operation 1401. For example, when the location of the variable frame is changed from the range corresponding to the virtual reality mode to the range corresponding to the audio mode, the processor 320 of the electronic device 301 may switch from the virtual reality mode to the audio mode.

The electronic device may transmit a signal indicating the switching to the second mode to the external electronic device, in operation 1403. For example, when the electronic device 301 switches from the virtual reality mode to the audio mode, the processor 320 may transmit a signal indicating the switching to the audio mode to the external electronic device that is communicating with the electronic device 301.

The electronic device may receive second content related to the first content from the external electronic device, in operation 1405. For example, when the electronic device 301 transmits a signal indicating the switching from the audio mode to the virtual reality mode to the external electronic device, the processor 320 may receive, from the external electronic device, address information of a website from which a product corresponding to an advertisement output in the audio mode can be purchased. In another example, when the electronic device 301 transmits a signal indicating the switching to the audio mode to the external electronic device while a poster of a particular movie is output in the virtual reality mode, the processor 320 may receive an OST of the particular movie from the external electronic device. In another example, when the electronic device 301 transmits a signal indicating the switching to the audio mode to the external electronic device while a music video of a particular singer is output in the virtual reality mode, the processor 320 may receive sound sources of the particular singer.

When receiving second content related to the first content, the electronic device may output the second content, in operation 1407. For example, the processor 320 may control the display 340 to output the website based on the address information of the website received from the external electronic device. In another example, the processor 320 may control the speaker 370 to output the OST of the particular movie received from the external electronic device. In another example, the processor 320 may control the speaker 370 to output the sound sources of the particular singer received from the external electronic device.

Although it has been described that the electronic device receives content from the external electronic device and outputs the received content, the electronic device may output the content on the external electronic device connected to the variable frame of the electronic device according to an embodiment of the present disclosure. For example, when the switching to the second mode is generated, the processor 320 may transmit a signal indicating the switching to the second mode to the external electronic device connected to the variable frame of the electronic device 301. In this case, after determining the second content related to the first content, the external electronic device may output the determined second content in response to the reception of the signal indicating the switching to the second mode. For example, the external electronic device may control at least one of the display and the speaker of the external electronic device to output the second content. For example, the external electronic device may output an image of the second content through the display of the external electronic device and transmit a signal associated with a sound of the second content to the electronic device 301 so that the electronic device 301 outputs the sound of the second content through the speaker 370 of the electronic device 301.

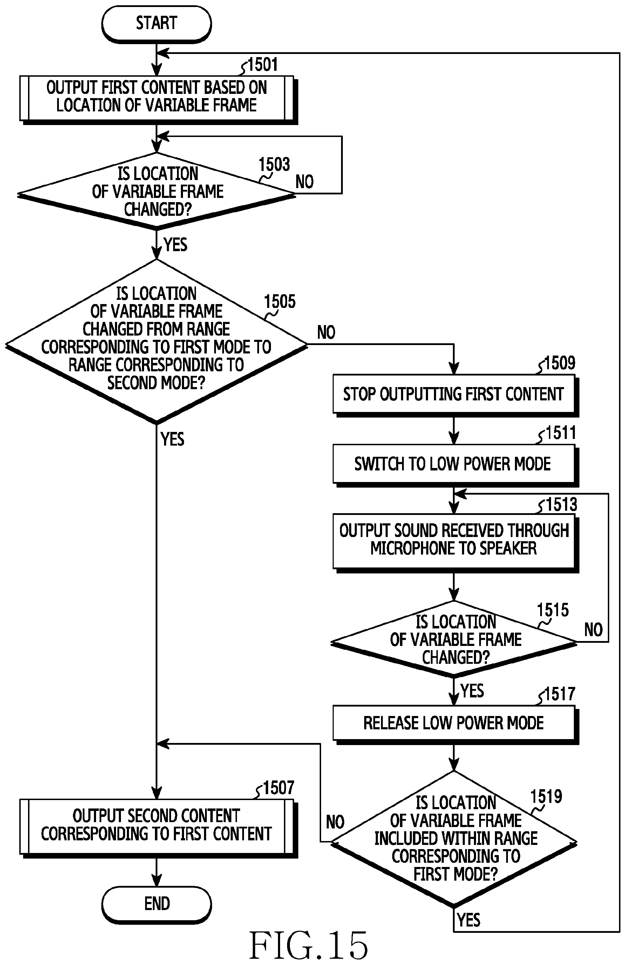

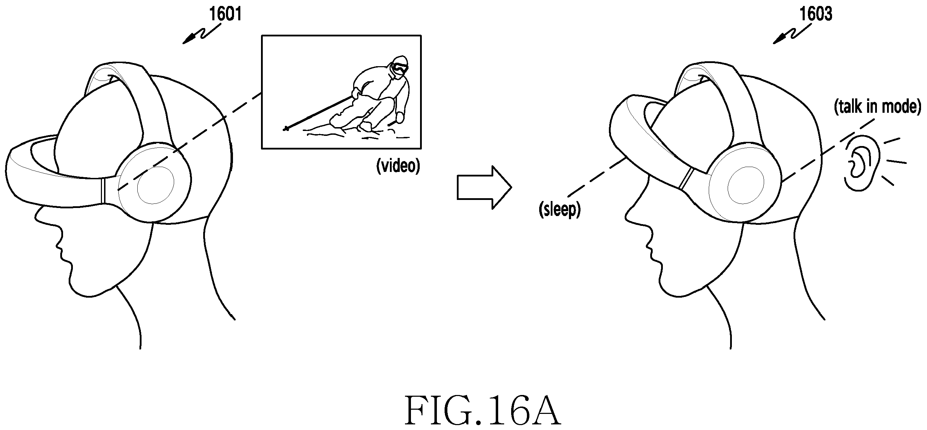

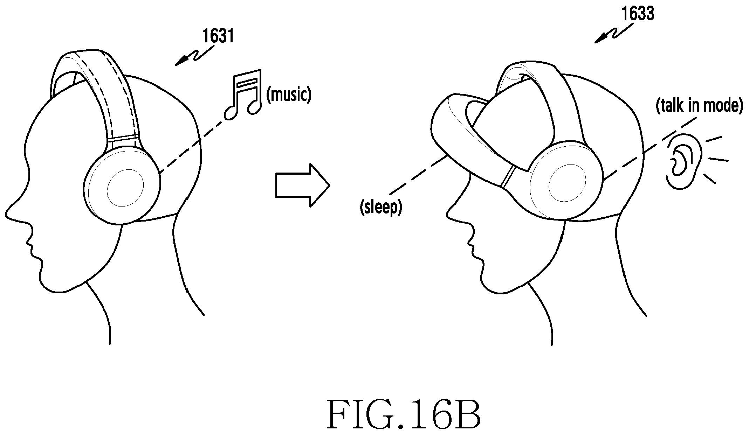

FIG. 15 is a flowchart illustrating an example of a process in which an electronic device outputs content based on a location of a variable frame according to an embodiment of the present disclosure. FIGS. 16A and 16B illustrate a concept in which an electronic device controls an output of content based on mode switching according to an embodiment of the present disclosure. In the following description, the electronic device may include all or some elements of the electronic device 301 of FIG. 3 or the electronic device 401 of FIG. 4.

Referring to FIG. 15, the electronic device may output first content based on the location of the variable frame, in operation 1501. For example, as in operation 501 of FIG. 5, when the location of the variable frame is included within the range corresponding to the first mode, the processor 320 of the electronic device 301 may control at least one of the display 340 and the speaker 370 to output content corresponding to an input among at least one content corresponding to the first mode stored in the memory 330. The range corresponding to the first mode may include a range corresponding to the virtual reality mode or the audio mode. The input may be received through the input module 350 or received from the external electronic device (for example, a wearable device or an external electronic device connected to the variable frame) functionally connected to the electronic device 301.

The electronic device may determine whether the location of the variable frame is changed, in operation 1503. For example, the processor 320 may identify whether the variable frame rotates with respect to the rotation axis arranged in at least the part of the fixed frame through the sensor module 380. When the variable frame rotates, the processor 320 may identify an angle of the variable frame through the sensor module 380. The processor 320 may determine whether the location of the variable frame escapes from the range corresponding to the first mode based on the angle of the variable frame. When the location of the variable frame escapes from the range corresponding to the first mode, the processor 320 may determine that the location of the variable frame is changed. When the location of the variable frame is not changed, the processor 320 may perform operation 1503 again for determining whether the location of the variable frame is changed. The sensor module 380 may include a rotation sensor for acquiring rotation information of a mode changeable frame or a plurality of switches.

When the location of the variable frame is changed, the electronic device may determine whether the location of the variable frame is changed from the range corresponding to the first mode to the range corresponding to the second mode, in operation 1505. For example, when the variable frame rotates, the processor 320 may determine whether the location of the rotated variable frame is changed from the range corresponding to the virtual reality mode to the range corresponding to the audio mode. In another example, when the variable frame rotates, the processor 320 may determine whether the location of the rotated variable frame is changed from the range corresponding to the audio mode to the range corresponding to the virtual reality mode.

When the location of the variable frame is changed from the range corresponding to the first mode to the range corresponding to the second mode, the electronic device may output the second content corresponding to the first content, in operation 1507. For example, as in operation 505 of FIG. 5, when the location of the variable frame is changed to the range corresponding to the audio mode while a movie is output in the virtual reality mode, the processor 320 may search for background music output in the virtual reality mode. The processor 320 may control the speaker 370 to output the found background music. In another example, when the location of the variable frame is changed to the range corresponding to the virtual reality mode while a voice call is performed in the audio mode, the processor 320 may receive video information corresponding to the voice call. The processor 320 may control the display 340 to output the received video information. In this case, the video information may be output along with a voice.

When the location of the variable frame is not changed from the range corresponding to the first mode to the range corresponding to the second mode, the electronic device may stop outputting the first content, in operation 1509. For example, when the location of the variable frame is not included within the range corresponding to the second mode (range corresponding to the virtual reality mode or the audio mode), the processor 320 may determine that switching to a third mode (switching to the idle mode) is generated. In another example, when no pressure is detected through the plurality of switches included in the fixed frame, the rotation axis, or the variable frame, the processor 320 may determine that the switching to the third mode is generated. The processor 320 may control at least one of the display 340 and the speaker 370 to stop the output of the first content in response to the generation of the switching to the third mode. In this case, the processor 320 may store information related to the first content in the memory 330. The information related to the first content may contain information related to the reproduction of content including a time point at which the output of the content is stopped.

The electronic device may switch to a low power mode in response to the stopping of the output of the first content, in operation 1511. For example, the processor 320 may be configured by a plurality of lower processors, and only some of the lower processors may operate and the remaining lower processor may switch to the low power mode corresponding to a sleep state. For example, when the output of audio content is stopped according to the switching from the audio mode to the idle mode, the processor 320 may operate only some of the plurality of lower processors included in the processor 320 and transition the remaining lower processors to the sleep state. For example, when the output of multimedia content is stopped according to the switching from the virtual reality mode to the idle mode, the processor 320 may turn off the display 340 to not output video information of the multimedia content. When there is no user input for a predefined time in the state in which the display 340 is turned off, the processor 320 may operate only some of the lower processors of the processor 320 and transition the remaining lower processors to the sleep state.

Referring to FIGS. 15, 16A, and 16B, the electronic device may output a sound received through the microphone to the speaker, in operation 1513. For example, when the switching to the idle mode is performed while multimedia content is output in the virtual reality mode, as indicated by reference numerals 1601 and 1603 in FIG. 16A, some activated lower processors among the plurality of lower processors included in the processor 320 may control the speaker (for example, the speaker 370) to output an external sound received through the microphone (for example, the microphone 360), as indicated by reference numeral 1603. In another example, when the switching to the idle mode is performed while audio content is output in the audio mode, as indicated by reference numerals 1631 and 1633 in Fig. 16B, some activated lower processors among the plurality of lower processors included in the processor 320 may control the speaker to output an external sound received through the microphone, as indicated by reference numeral 1633. In this case, when the microphone is in an inactive state, the processor 320 may activate the microphone.

The electronic device may determine whether the location of the variable frame is changed, in operation 1515. For example, the processor 320 may identify an angle of the variable frame rotating with respect to the rotation axis arranged in at least the part of the fixed frame in the state in which the electronic device operates in the idle mode. The processor 320 may determine whether the location of the variable frame is included within the range corresponding to the first mode or the range corresponding to the second mode based on the angle of the variable frame. When the location of the variable frame is included within the range corresponding to the first mode or the range corresponding to the second mode, the processor 320 may determine that the location of the variable frame is changed. In another example, when pressure is detected through at least one of the plurality of switches included in the fixed frame, the rotation axis, or the variable frame, the processor 320 may determine that the location of the variable frame is changed. When the location of the variable frame is not changed, the processor 320 may perform operation 1513 again for controlling the speaker 370 to output a sound received through the microphone 360.

When the location of the variable frame is changed, the electronic device may release a low power mode, in operation 1517. For example, some activated lower processors among the plurality of lower processor included in the processor 320 may activate the remaining lower processor in the sleep state. In this case, the processor 320 may control the speaker 370 to not output an external sound received through the microphone 360 or deactivate the microphone 360.

The electronic device may determine whether the location of the variable frame is included within the range corresponding to the first mode, in operation 1519. For example, when the location of the variable frame is included within an angle range corresponding to an operation mode before the idle mode, the processor 320 may determine that the location of the variable frame is included within the range corresponding to the first mode. When the location of the variable frame is included within the range corresponding to the first mode, the processor 320 may perform operation 1501 again for outputting the first content. In this case, the processor 320 may control at least one of the display 340 and the speaker 370 to output the first content after the output of the first content is stopped based on information related to the reproduction of the first content stored in the memory 330. When the location of the variable frame is not included within the range corresponding to the first mode (included within the range corresponding to the second mode), the processor 320 may perform operation 1507 for outputting the second content corresponding to the first content. In this case, the processor 320 may control at least one of the display 340 and the speaker 370 to output the second content corresponding to the first content after the output of the first content is stopped based on information related to the reproduction of the first content stored in the memory 330.

According to an embodiment of the present disclosure, a method of operating an electronic device comprising a fixed frame worn on a user's head and a variable frame rotating with respect to a rotation axis arranged in at least a part of the fixed frame is provided. The method may include an operation of outputting first content at least based on a location of the variable frame with respect to the fixed frame corresponding to a first range, and an operation of outputting second content corresponding to the first content at least based on a location of the variable frame with respect to the fixed frame corresponding to a second range.

According to an embodiment, the operation of outputting the first content may include an operation of outputting an interface for providing at least one content at least based on the location of the variable frame corresponding to the first range; and an operation of outputting the first content among the at least one content based on a user input corresponding to the interface.

According to an embodiment, the at least one content may include content stored in a memory of the electronic device or content stored in an external electronic device communication-connected with the electronic device.

According to an embodiment, the method of operating the electronic device may further include an operation of acquiring rotation information of the variable frame based on sensing information of a sensor module of the electronic device.

According to an embodiment, the method of operating the electronic device may further include an operation of, when the location of the variable frame corresponds to the first range, operating in the virtual reality mode, and an operation of, when the location of the variable frame corresponds to the second range, operating in the audio mode.

According to an embodiment, the operation of outputting the second content corresponding to the first content may include an operation of, when the location of the variable frame is changed from the first range to the second range, acquiring the second content corresponding to the first content from a memory of the electronic device, and an operation of outputting the second content.

According to an embodiment, the operation of outputting the second content corresponding to the first content may include an operation of acquiring the second content corresponding to the first content from the external electronic device functionally connected to the electronic device, and an operation of outputting the second content.

According to an embodiment, the variable frame may further include an accommodation portion for connection with a display device.

According to an embodiment, the method of operating the electronic device may further include an operation of stopping outputting the first content or the second content at least based on a location of the variable frame with respect to the fixed frame corresponding to a third range, and an operation of storing information related to reproduction of the first content or the second content in a memory of the electronic device.

According to an embodiment, the method of operating the electronic device may further include an operation of outputting, through a speaker, a sound received through a microphone of the electronic device at least based on the location of the variable frame with respect to the fixed frame corresponding to the third range.

According to an embodiment, the method of operating the electronic device may further include an operation of, when the location of the variable frame for the fixed frame is changed to the first range, outputting the first content based on information related to reproduction of the first content, and an operation of, when the location of the variable frame for the fixed frame is changed to the second range, outputting the second content corresponding to the first content based on the information related to the reproduction of the first content.

According to an embodiment of the present disclosure, a method of operating an electronic device including a fixed frame worn on a user's head and a variable frame rotating with respect to a rotation axis arranged in at least a part of the fixed frame and electrically connected to an external electronic device is provided. The method may include an operation of determining whether a location of the variable frame is changed based on the fixed frame, and an operation of, when the location of the variable frame is changed, transmitting a signal indicating the change in the location of the variable frame to the external electronic device.

According to an embodiment, an operation of transmitting a signal indicating a generation of mode switching to the external electronic device may include an operation of, when the location of the variable frame is changed from a first range to a second range, transmitting the signal indicating the change in the location of the variable frame to the external electronic device.

According to an embodiment, the method of operating the electronic device may further include an operation of receiving a signal related to first content from the external electronic device at least based on the location of the variable frame corresponding to the first range, and an operation of outputting the first content through a speaker of the electronic device based on the received signal.

According to an embodiment, the method of operating the electronic device may further include an operation of, when the location of the variable frame is changed from the first range to the second range, receiving a signal related to second content corresponding to the first content from the external electronic device, and an operation of outputting the second content through the speaker of the electronic device based on the received signal.

A method and an apparatus for operating an electronic device according to various embodiments can provide various types of content to a user by changing an operation mode of the electronic device based on a location of a variable frame rotating with respect to a rotation axis arranged in at least a part of a fixed frame.

A method and an apparatus for operating an electronic device according to various embodiments can make the user more immersed in content by providing, when the operation mode of the electronic device is changed according to a change of the location of the variable frame in the electronic device, content related to content provided before the location of the variable frame is changed.

A term "module" used in the present document includes a unit consisting of hardware, software, or firmware, and may be interchangeably used with a term such as a unit, a logic, a logical block, a component, a circuit, and the like. The "module" may be an integrally constructed component or a minimum unit or one part thereof for performing one or more functions. The "module" may be mechanically or electrically implemented, and may include, for example, an application-specific integrated circuit (ASIC) chip, field-programmable gate arrays (FPGAs), or a programmable-logic device, which is known or to be developed to perform certain operations. At least one part of an apparatus (e.g., modules or functions thereof) or method (e.g., operations) according to various embodiments may be implemented with an instruction stored in a computer-readable storage media (e.g., the memory 230). If the instruction is executed by one or more processors (e.g., the processor 220), the one or more processors may perform a function corresponding to the instruction. The computer-readable storage media may include a hard disk, a floppy disk, magnetic media (e.g., a magnetic tape), optical media (e.g., a compact disc-ROM (CD-ROM), a digital versatile disc (DVD), magnetic-optic media (e.g., a floptical disk)), an internal memory, or the like. The instruction may include a code created by a compiler or a code executable by an interpreter. A module or program module according to various embodiments may further include at least one or more of the aforementioned constituent elements, or omit some, or further include another constituent element. Operations carried out by a module, a program module or another constituent element according to various embodiments may be executed in a sequential, parallel, repeated or heuristic manner, or at least some operations may be executed in different order or may be omitted, or another operation may be added.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
a fixed frame configured to be worn on a head of a user;
a variable frame configured to rotate with respect to a rotation axis arranged in at least a part of the fixed frame; and
a processor configured to:
output first content at least based on a first location of the variable frame with respect to the fixed frame, the first location corresponding to a first range, and
output second content corresponding to the first content at least based on a second location of the variable frame with respect to the fixed frame, the second location corresponding to a second range.

2. The electronic device of claim 1, wherein the processor is further configured to determine a location of the variable frame by identifying, through a sensor included in the rotation axis, an angle of the variable frame with respect to the rotation axis of the fixed frame.

3. The electronic device of claim 1, wherein the processor is further configured to:
output an interface for providing at least one content at least based on the first location of the variable frame corresponding to the first range; and
output the first content among the at least one content based on a user input corresponding to the interface.

4. The electronic device of claim 1, further comprising:
a sensor module,
wherein the processor is further configured to acquire location information of the variable frame based on sensing information of the sensor module.

5. The electronic device of claim 1, wherein the processor is further configured to:
when the first location of the variable frame corresponds to the first range, operate in a virtual reality mode; and
when the second location of the variable frame corresponds to the second range, operate in an audio mode.

6. The electronic device of claim 1, wherein the processor is further configured to, when the variable frame is changed from the first location corresonding to the first range to the second location corresonding to the second range, acquire the second content corresponding to the first content from a memory of the electronic device and output the second content.

7. The electronic device of claim 1, wherein the processor is further configured to:
acquire the second content corresponding to the first content from an external electronic device functionally connected to the electronic device; and
output the second content.

8. The electronic device of claim 1, wherein the variable frame further comprises an accommodation portion configured to be connected with a display device.

9. The electronic device of claim 1, wherein the processor is further configured to:
stop outputting the first content or the second content at least based on a third location of the variable frame with respect to the fixed frame, the third location corresponding to a third range; and
store information related to reproduction of the first content or the second content in a memory of the electronic device.

10. The electronic device of claim 9, further comprising:
a microphone; and
a speaker,
wherein the processor is further configured to control the speaker to output a sound received through the microphone at least based on the third location of the variable frame corresponding to the third range.

11. The electronic device of claim 9, wherein the processor is further configured to:
when a location of the variable frame is changed to the first location corresponding to the first range, output the first content based on the information related to the reproduction of the first content; and
when the location of the variable frame is changed to the second location corresponding to the second range, output the second content corresponding to the first content based on the reproduction of the first content.

12. A method of operating an electronic device that comprises a fixed frame configured to be worn on a head of a user and a variable frame configured to rotate with respect to a rotation axis arranged in at least a part of the fixed frame, the method comprising:
outputting first content at least based on a first location of the variable frame with respect to the fixed frame, the first location corresponding to a first range; and
outputting second content corresponding to the first content at least based on a second location of the variable frame with respect to the fixed frame, the second location corresponding to a second range.

13. The method of claim 12, wherein the outputting of the first content comprises:
outputting an interface for providing at least one content at least based on the first location of the variable frame corresponding to the first range; and
outputting the first content among the at least one content based on a user input corresponding to the interface.

14. The method of claim 12, further comprising acquiring location information of the variable frame based on sensing information of at least one sensor of the electronic device.

15. The method of claim 12, wherein the outputting of the second content corresponding to the first content comprises:
when an angle of the variable frame is changed from the first location correseponding to the first range to the second location corresponding to the second range, acquiring the second content corresponding to the first content from a memory of the electronic device; and
outputting the second content.
